(19) Europäisches Patentamt
European Patent Office
Office européen des brevets

(11) **EP 4 173 988 A1**

(12) **EUROPEAN PATENT APPLICATION**
published in accordance with Art. 153(4) EPC

(43) Date of publication:
**03.05.2023 Bulletin 2023/18**

(21) Application number: **21831690.9**

(22) Date of filing: **14.06.2021**

(51) International Patent Classification (IPC):
**B65D 65/46** (2006.01)     **C08K 5/053** (2006.01)
**C08L 29/04** (2006.01)     **C08J 5/18** (2006.01)

(52) Cooperative Patent Classification (CPC):
**B65D 65/46; C08J 5/18; C08K 5/053; C08L 29/04**

(86) International application number:
**PCT/JP2021/022535**

(87) International publication number:
**WO 2022/004341 (06.01.2022 Gazette 2022/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.06.2020 JP 2020111936**

(71) Applicant: **Kuraray Co., Ltd.
Kurashiki-shi, Okayama 710-0801 (JP)**

(72) Inventors:
• **OKAMOTO, Minoru**
**Kurashiki-shi, Okayama 710-0801 (JP)**
• **SHIMIZU, Sayaka**
**Kurashiki-shi, Okayama 713-8550 (JP)**
• **KAZETO, Osamu**
**Kurashiki-shi, Okayama 713-8550 (JP)**

(74) Representative: **D Young & Co LLP
120 Holborn
London EC1N 2DY (GB)**

(54) **WATER-SOLUBLE FILM AND PACKAGING**

(57)     [Problem to be solved] To provide a water-soluble film capable of which is excellent in water solubility and less likely to cause problems such as breakage of packaging material during storage and transportation by controlling the crystal long period structure of the PVA molecule and, for example, the degree of phase separation state between PVA and other components in the water-soluble film.

[Solution] A water-soluble film of the present invention is a water-soluble film containing a polyvinyl alcohol based resin, wherein small-angle X-ray scattering (SAXS) measurement is performed on the water-soluble film in a mixed liquid of water and methanol at a volume ratio of 2:8 and when a scattering intensity at a scattering vector value determined from a obtained scattering intensity profile (q value) of 0.2 $nm^{-1}$ is defined as I(0.2) and a scattering intensity at the q value of 0.5 $nm^{-1}$ is defined as 1(0.5), an intensity ratio (I(0.5)/I(0.2)) of the scattering intensity I(0.5) to the scattering intensity I(0.2) is 0.05 to 0.5.

FIG. 1

CRYSTAL PART     AMORPHOUS PART

**Description**

## TECHNICAL FIELD

The present invention relates to a water-soluble film of a polyvinyl alcohol based resin that is preferably used for packaging various chemicals and the like and a package using the same.

## RELATED ART

In related art, taking advantage of excellent solubility in water, water-soluble films have been used in a wide range of fields, including packaging of various chemicals, such as liquid detergents and pesticides, and seed tapes encapsulating seeds.

For water-soluble films to be used for such an application, polyvinyl alcohol based resins (hereinafter, may be simply referred to as "PVA") are mainly used. A water-soluble films in which water-solubility is enhanced by blending various additives such as a plasticizer and by using modified polyvinyl alcohol have been disclosed (see, for example, Patent Document 1).

Small-angle X-ray scattering (hereinafter, may be referred to as "SAXS") measurement is used as a method for measuring an average separation distance between crystal parts of PVA molecules contained in the water-soluble film (hereinafter, may be referred to as "crystal long period"). The SAXS measurement can also be performed, in particular, with the water-soluble film immersed in the solvent. Therefore, by performing SAXS measurement of the water-soluble film in water, it is also possible to grasp a structure based on the crystal long period of the PVA molecule (hereinafter, may be referred to as "long crystal period structure", and see, for example, Patent Document 2).

It is also possible to grasp degree of phase separation state between materials having different densities (interphase distance of phase separation structure) from scattering vector value (q value) in SAXS measurement. In general, it is known that the larger value of scattering intensity ($I(q)$) in the region where the q value is small, the greater the degree of phase separation state (see, for example, Non-Patent Document 1.).

## PRIOR ART DOCUMENT

## PATENT DOCUMENT

    Patent Document 1: JP-A 2017-078166
    Patent Document 2: WO 2013/146147

## NON-PATENT DOCUMENT

Non-Patent Document 1: Sakurai et al. J. Appl. Cryst, 24 679(1991)

## SUMMARY OF THE INVENTION

## PROBLEM TO BE SOLVED BY THE INVENTION

In recent years, products in which chemical such as laundry detergent is packaged (encapsulated) using a water-soluble film containing PVA have been sold. In this application, the water-soluble film is required to have the performance of quickly dissolving in water and releasing the encapsulated chemical, especially the performance of being able to quickly dissolve in water even in cold conditions such as winter.

In a conventional method, the crystallinity and the like of the water-soluble film is reduced by increasing an amount of plasticizer added to the water-soluble film, and solubility of the water-soluble film in water (water solubility) is improved. However, in this method, although the water solubility of the water-soluble film increases, degree of phase separation state between the plasticizer and PVA becomes too large, causing sticking between the water-soluble films and a decrease in the mechanical strength of the water-soluble film itself due to bleeding out of the plasticizer outside the water-soluble film so that it is easy to cause problems such as breakage of the material. For this reason, it has been difficult to realize a water-soluble film capable of achieving both high water solubility and excellent storage and transportability.

It is an object of the present invention to provide a water-soluble film capable of which is excellent in water solubility and less likely to cause problems such as breakage of packaging material during storage and transportation by controlling the crystal long period structure of the PVA molecule and, for example, the degree of phase separation state between PVA and other components in the water-soluble film.

## MEANS FOR SOLVING THE PROBLEM

As a result of intensive studies, the present inventors have found that when the SAXS measurement is performed on the water-soluble film in a mixed liquid of water and methanol at a volume ratio of 2:8 (hereinafter sometimes referred to as "water meta"), an intensity ratio of a scattering intensity (1(0.5)) at a scattering vector value determined from a obtained scattering intensity profile (q value) of 0.5 nm$^{-1}$ to a scattering intensity (I(0.2)) at the q value of 0.2 nm$^{-1}$ (I(0.5)/I(0.2)) is set to a specific range, so that the above objects can be achieved. Furthermore, the present inventors have completed the present invention through repeated studies based on this knowledge.

That is, the present invention relates to [1] through [7] below.

[1] A water-soluble film containing a polyvinyl alcohol based resin,
wherein small-angle X-ray scattering (SAXS) measurement is performed on the water-soluble film in a mixed liquid of water and methanol at a volume ratio of 2:8 and when a scattering intensity at a scattering vector value determined from a obtained scattering intensity profile (q value) of 0.2 nm$^{-1}$ is defined as I(0.2) and a scattering intensity at the q value of 0.5 nm$^{-1}$ is defined as 1(0.5), an intensity ratio (I(0.5)/I(0.2)) of the scattering intensity I(0.5) to the scattering intensity I(0.2) is 0.05 to 0.5.

[2] The water-soluble film in the above-mentioned item [1], wherein the water-soluble film further contains a plasticizer.
[3] The water-soluble film in the above-mentioned item [2], wherein the plasticizer is a polyhydric alcohol.
[4] The water-soluble film in the above-mentioned item [3], wherein the polyhydric alcohol contains at least one selected from the group consisting of ethylene glycol, glycerin, diglycerin, propylene glycol and diethylene glycol.

[5] A package comprising:

a packaging material composed of the water-soluble film described in any one of the above mentioned items [1] to [4]; and
a chemical encapsulated in the packaging material.

[6] The package in the above-mentioned item [5], wherein the chemical is a pesticide, a detergent or a germicide.
[7] The package in the above-mentioned item [5] or [6], wherein the chemical is in a liquid form.

## EFFECTS OF THE INVENTION

According to the present invention, it is possible to provide a water-soluble film which is excellent in solubility in water (water-soluble) and less likely to cause problems such as breakage of a packaging material during storage and transportation, and a package using the same.

## BRIEF DESCRITION OF THE DRAWINGS

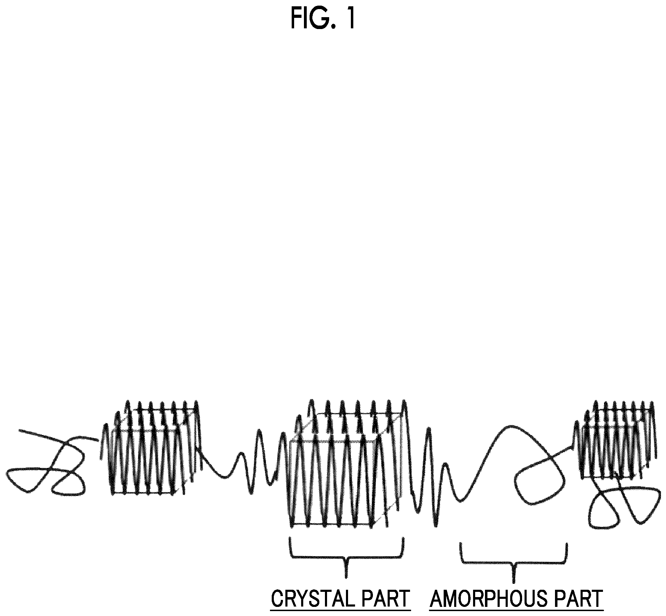

FIG. 1 is a diagram schematically showing a crystal structure of PVA molecules.

## MODE FOR CARRING OUT THE INVENTION

The present invention is specifically described below.

<Small-angle X-ray scattering measurement>

A water-soluble film of the present invention contains polyvinyl alcohol based resin (PVA). Below, the water-soluble film of the present invention may be referred to as "PVA film". The PVA film of the present embodiment preferably further contains other components (additives such as plasticizers) other than the PVA.

Further, small-angle X-ray scattering (SAXS) measurement is performed on the water-soluble film in a mixed liquid of water and methanol at a volume ratio of 2:8, and when a scattering intensity at a scattering vector value determined from a obtained scattering intensity profile (q value) of 0.2 nm$^{-1}$ is defined as I(0.2) and a scattering intensity at the q value of 0.5 nm$^{-1}$ is defined as 1(0.5), an intensity ratio (I(0.5)/I(0.2)) of the scattering intensity I(0.5) to the scattering intensity I(0.2) is 0.05 to 0.5.

In this context, the SAXS measurement is based on the measurement principle to analyze diffraction caused as a result of, when a sample is irradiated with X-ray, scattering and interference of the X-ray by electrons around the atom. In particular, the SAXS measurement is an analytical method for evaluating a structure of a substance by measuring diffracted X-rays that appear in a low-angle region of $2\theta<10°$ and is usually considered to be capable of evaluating a structure in size approximately from several nm to several tens of nm. By using this diffraction information, it is possible to know a crystal long period structure of the PVA molecules (structure based on the crystal long period of the PVA molecules), degree of phase separation state between the components contained in the PVA film, and the like.

When X-rays are incident on a regularly arrayed substance, the X-rays are scattered. The scattered X-rays interfere with each other and reinforce each other in a specific direction. According to Bragg equation, when d denotes a lattice distance, $\theta$ denotes a Bragg angle, and $\lambda$ denotes a wavelength of the X-ray, diffracted X-rays are observed only in directions satisfying $2d\sin\theta=n\lambda$.

According to the studies of the present inventors, it has been found that in the PVA film, a diffraction peak derived from a repeated structure of lamellar crystals (crystal part shown in FIG. 1) appears at a q value of about 0.5 $nm^{-1}$ while a diffraction peak derived from a repeated structure between lamellar crystals (amorphous part shown in FIG. 1) appears at a q value of about 0.2 $nm^{-1}$.

Therefore, when the above intensity ratio (I(0.5)/I(0.2)) is obtained, it means that the smaller this value is, the higher a ratio of the amorphous part in the PVA molecule is, and the water solubility of the PVA film is likely to increase. On the other hand, if the intensity ratio is too small, the ratio of the amorphous part in the PVA molecules will be too large and a shape retaining property of the PVA film will be reduced, so that problems such as breakage of the packaging material made of the PVA film are likely to occur during storage and transportation.

In addition, in the case of the PVA film containing the PVA and other components (additives such as plasticizers) other than the PVA, it is known that in general, the larger the value of the scattering intensity (I(q)) in the region where the q value is small is, the greater the degree of the phase separation state (the interphase distance of the phase separation structure) as described above is. According to the studies of the present inventors, it has also been found that the degree of the phase separation state can be grasped based on the value of the intensity ratio of the two scattering intensities (in particular, I(0.5)/I(0.2)) in the region where the q value is small.

Specifically, it means that the smaller the intensity ratio (I(0.5)/I(0.2)) is, the larger the scattering intensity at a smaller q value is, so that the degree of the phase separation state is large and the water solubility of the PVA film tends to increase. On the other hand, if the intensity ratio is too small, the degree of the phase separation state becomes too large, causing other components to bleed out from the PVA film, so that problems such as breakage of the packaging material are likely to occur during storage and transportation.

Therefore, there is a preferable lower limit for the intensity ratio. On the other hand, if the intensity ratio is too large, the ratio of the crystal part in the PVA molecule will be too large, and in the PVA film containing other components, the degree of the phase separation state will be too small, so that the water solubility of the PVA film tends to decrease.

Therefore, in the present invention, the intensity ratio (I(0.5)/I(0.2)) is set to be in the range of 0.05 to 0.5.

With such a configuration, the crystal long period structure of the PVA molecule (that is, the quantitative relationship between the crystal part and the amorphous part occupying the PVA molecule) becomes appropriate and in the case of the PVA film containing other components, the degree of the phase separation state in the PVA film also becomes moderate. As a result, it is possible to obtain the PVA film which is excellent in water solubility and is less likely to cause problems such as breakage of the packaging material during storage and transportation.

A specific implementation method of the SAXS measurement will be described below.

(Implementation method of SAXS measurement)

·Sample

A PVA film is cut into a size of 2 cm × 1 cm without distinguishing between the transversal direction (TD) and the machine direction (MD) to prepare a plurality of samples. The PVA film can be formed according to the method described in Examples and Comparative Examples below.

First, the obtained sample is stored for 24 hours in a thermo-hygrostat adjusted to 20°C-65% RH to adjust the humidity. Thereafter, the sample is immersed in water meta for 24 hours to swell, and then 10 sheets are stacked together with water meta and set in a measurement cell. Structure of the cell is such that a polyimide film (manufactured by Chemplex Industries, Inc., "Kapton Film") with a thickness of 7.5 $\mu$m is used as window materials on the incident light side and the reflected light side, and the interval between the window materials was about 1.5 mm, so that the sample to be measured can be sealed. By using the cell, the sample can be placed in the water meta in the usual measurement arrangement in the following measurement equipment.

·Measurement Apparatus

A nanoscale X-ray structure evaluation apparatus (small-angle X-ray scattering measurement apparatus: "Nano Viewer" manufactured by Rigaku Corp.)

·Measurement Conditions(Transmission Measurement)

X-ray: CuKα ray
Wavelength: 0.15418 nm
Output: 40 kV-20 mA
First Slit: ϕ0.4 mm
Second Slit: ϕ0.2 mm
Third Slit: ϕ0.45 mm
Detector: Semiconductor Two-Dimensional Detector PILATUS-100K (Measurement Area=33.5 mm×83.8 mm)
Pixel Size: 0.172 mm square
Camera Length: 1004.51 mm
Beam Stopper Diameter: 4 mm
X-Ray Exposure Time: 1 Hour
Measurement Mode: Usual Measurement
Environment Temperature: Room Temperature (22°C)

·Data Analysis

In the SAXS measurement, the scattered X-rays caused by the PVA film are overlapped with the scattered X-rays caused by structures such as slits, the air present in the X-ray passing portion, and the water meta present inside the cell. Therefore, it is necessary to remove (correct) the scattered X-rays caused by these as the background.

Therefore, the scattering intensity caused by the above is calculated separately and corrected by subtracting it from the scattering intensity obtained by measuring the sample.

Further, from the scattering intensity image measured by the two-dimensional detector, a scattering intensity profile (scattering curve) is obtained by integrating the scattering intensity with respect to the scattering vector q in the azimuth direction and deriving the relationship between the scattering vector q and the one-dimensional profile of the scattering intensity $I(q)$.

·Grasp of crystal long period structure and degree of phase separation state

In the present invention, the value of the intensity ratio ($I(0.5)/I(0.2)$) of the scattering intensity ($I(0.5)$) at the q value of 0.5 nm$^{-1}$ to the scattering intensity ($I(0.2)$) at the q value of 0.2 nm$^{-1}$ is obtained. Thus, in the present embodiment, the crystal long period structure of the PVA molecule (that is, the quantitative relationship between the crystal part and the amorphous part occupying the PVA molecule) and the degree of the phase separation state in the PVA film can be grasped.

The larger the intensity ratio, the larger the ratio of the crystal part in the PVA molecule, which means that the degree of the phase separation state in the PVA film is small, and in contrast, the smaller the intensity ratio, the higher the ratio of the amorphous part in the PVA molecules, which means that the degree of the phase separation state in the PVA film is large.

The value of the intensity ratio ($I(0.5)/I(0.2)$) is 0.05 to 0.5 and is preferably 0.1 to 0.5.

When the value of the intensity ratio is more than 0.5, it means that the ratio of the crystal part in the PVA molecule is relatively large and the degree of the phase separation state in the PVA film is relatively small. Therefore, such a PVA film is less likely to exhibit excellent water solubility due to the amorphous part of the PVA molecule and the phase separation state.

On the other hand, when the value of the intensity ratio is less than 0.05, it means that the ratio of the amorphous part in the PVA molecule is too large, and the degree of the phase separation state in the PVA film is too large. Bleeding out of the plasticizer to the outside of the PVA film causes sticking between the PVA films and a decrease in the mechanical strength of the PVA film itself, which causes problems such as breakage of the packaging material during storage and transportation.

In the present invention, it is important to control the above parameter ($I(0.5)/I(0.2)$) within the above range. Methods for controlling the above parameters include, for example, a method of adjusting a type of PVA (degree of saponification, amount of modification, unmodified PVA/modified PVA blend ratio, etc.), a method of adjusting the type and amount of plasticizer added and the method of addition, a method of adjusting film production conditions (stock solution preparation conditions, roll temperature, heat treatment conditions, etc.), or a method of adjusting by a combination of the above methods.

<Polyvinyl alcohol based resin>

The water-soluble film (PVA film) of the present invention contains a polyvinyl alcohol based resin (PVA).

As the PVA, a polymer produced by saponifying a vinyl ester polymer obtained by polymerizing a vinyl ester monomer can be used.

Examples of vinyl ester based monomers include vinyl formate, vinyl acetate, vinyl propionate, vinyl valerate, vinyl laurate, vinyl stearate, vinyl benzoate, vinyl pivalate, and vinyl versatate, and the like. Among them, vinyl acetate is preferable as the vinyl ester based monomer.

The vinyl ester based polymer is not particularly limited, but a polymer obtained by using only one or two or more kinds of vinyl ester based monomers as a monomer is preferable, and a polymer obtained by using only one kind of vinyl ester based monomer as a monomer is more preferable. In this regard, the vinyl ester based polymer may be a copolymer of one or two or more kinds of vinyl ester based monomer and other monomer copolymerizable therewith.

Examples of the other monomer include, for example, ethylene; olefins having a carbon number from 3 to 30, such as propylene, 1-butene, and isobutene; acrylic acid and salts thereof; acrylic esters, such as methyl acrylate, ethyl acrylate, n-propyl acrylate, i-propyl acrylate, n-butyl acrylate, i-butyl acrylate, t-butyl acrylate, 2-ethylhexyl acrylate, dodecyl acrylate, and octadecyl acrylate; methacrylic acid and salts thereof; methacrylic esters, such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, dodecyl methacrylate, and octadecyl methacrylate; acrylamide derivatives, such as acrylamide, N-methylacrylamide, N-ethylacrylamide, N,N-dimethylacrylamide, diacetone acrylamide, acrylamidopropanesulfonic acid and salts thereof, acrylamide propyldimethylamine and salts thereof, and N-methylolacrylamide and derivatives thereof; methacrylamide derivatives, such as methacrylamide, N-methylmethacrylamide, N-ethylmethacrylamide, methacrylamidopropanesulfonic acid and salts thereof, methacrylamide propyldimethylamine and salts thereof, and N-methylolmethacrylamide and derivatives thereof; N-vinylamides, such as N-vinylformamide, N-vinylacetamide, and N-vinylpyrrolidone; vinyl ethers, such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, and stearyl vinyl ether; vinyl cyanides, such as acrylonitrile and methacrylonitrile; vinyl halides, such as vinyl chloride, vinylidene chloride, vinyl fluoride, and vinylidene fluoride; allyl compounds, such as allyl acetate and allyl chloride; maleic acid and salts, esters, and acid anhydrides thereof; itaconic acid and salts, esters, and acid anhydrides thereof; vinylsilyl compounds, such as vinyltrimethoxysilane; isopropenyl acetate; and the like.

The vinyl ester based polymer may have a structural unit derived from one or two or more kinds of the other monomer above.

The ratio of structural units derived from other monomer in the vinyl ester based polymer is not particularly limited from the viewpoint of enhancing both the water solubility and mechanical strength of the PVA film, but it is preferably 15 mol % or less, more preferably 5 mol % or less, based on the number of moles of all structural units constituting the vinyl ester based polymer.

Adjusting the type and ratio of structural units derived from other monomer in the vinyl ester polymer is one of the methods for controlling the phase separation state in the PVA film.

Although degree of polymerization of the PVA is not particularly limited, the following range is preferable. That is, the lower limit of the degree of polymerization is preferably 200 or more, more preferably 300 or more, and even more preferably 500 or more, from the viewpoint of maintaining sufficient mechanical strength of the PVA film. On the other hand, the upper limit of the degree of polymerization is preferably 8,000 or less, more preferably 5,000 or less, and even more preferably 3,000 or less, from the viewpoint of enhancing PVA productivity, PVA film productivity, and the like.

Here, the degree of polymerization means the average degree of polymerization measured in accordance with the description of JIS K 6726-1994. In this specification, the degree of polymerization is determined by the following formula from the intrinsic viscosity [η] (unit: deciliter/g) measured in water at 30°C after resaponifying and purifying of the PVA.

$$\texttt{Degree of polymerization } P_o = ([\eta] \times 10^4 / 8.29)^{(1/0.62)}$$

In the present invention, the degree of saponification of the PVA is not particularly limited, but is preferably 64 to 93 mol%. By adjusting the degree of saponification of the PVA in the range of 64 to 93 mol %, it is easy to achieve both water solubility and mechanical strength of the PVA film. The lower limit of the degree of saponification is not particularly limited, it is more preferably 70 mol% or more, and even more preferably 75 mol% or more. On the other hand, the upper limit of the degree of saponification is not particularly limited, but it is more preferably 91 mol% or less, and even more preferably 90 mol% or less.

In this context, the degree of saponification of the PVA means a ratio (mol%) indicating the number of moles of the vinyl alcohol units based on the total number of moles of the structural units (typically, vinyl ester based monomer units) that may be converted to vinyl alcohol units by saponification and the vinyl alcohol units in the PVA.

The degree of saponification of the PVA can be measured in accordance with the description of JIS K6726-1994.

The PVA film may contain one type of PVA singly, or may contain two or more types of PVA having different degrees of polymerization, saponification, modification, and the like.

The upper limit of the PVA content in the PVA film is not particularly limited, but it is preferably 100% by mass. On the other hand, the lower limit of the PVA content is not particularly limited, but is preferably 50% by mass, more preferably 80% by mass, and even more preferably 85% by mass.

<Plasticizer>

The PVA film preferably contains a plasticizer. By including a plasticizer, it is possible to improve the water solubility of the PVA film and the mechanical properties (impact resistance, etc.), and impart good processability during secondary processing.

In the present invention, it is considered that the value of the intensity ratio $(I(0.5)/I(0.2))$ used as an index for grasping the degree of the phase separation state in the PVA film is greatly affected by the state of dispersion of the plasticizer in the PVA film. Therefore, when a large amount of the plasticizer having low affinity with PVA is added, the degree of the phase separation state in the PVA film becomes too large. Further, when a small amount of the plasticizer having high affinity with PVA is added, almost no phase separation occurs in the PVA film. Therefore, in either case, the above parameter is out of the range of 0.05 to 0.5. Therefore, it is preferable to add an appropriate amount of the plasticizer having an appropriate affinity for the PVA to the PVA film.

Polyhydric alcohols are preferred as plasticizers. The polyhydric alcohol can easily adjust its affinity with the PVA by appropriately selecting the number of hydroxyl groups and the number of carbon atoms.

Specific examples of polyhydric alcohols include ethylene glycol, glycerin, diglycerin, propylene glycol, diethylene glycol, triethylene glycol, tetraethylene glycol, polyethylene glycol, trimethylolpropane, sorbitol and the like.

Among the above-mentioned plasticizers, ethylene glycol, glycerin, diglycerin, propylene glycol, and diethylene glycol are preferable, and glycerin is more preferable, because they have moderate affinity with the PVA.

The above plasticizers may be used singly or in combination of two or more.

Also, by adjusting a content of the plasticizer in the PVA film, it is possible to control the phase separation state in the PVA film.

Depending on a primary structure of the PVA molecular chain, in general, PVA films containing a small amount of plasticizer are more likely to crystallize PVA molecules by heat treatment than PVA films containing no plasticizer. It is presumed that this is because the addition of a small amount of the plasticizer increases the mobility of the PVA molecules, making it easier for the PVA molecules to adopt a more energetically stable crystal structure (that is, the ratio of the crystal part in the PVA molecule increases) and a phase separation state between the crystal part of the PVA molecule and the plasticizer or the like is likely to be formed. On the other hand, if the PVA film contains an excessive amount of plasticizer, the progress of crystallization of the PVA molecules is inhibited. It is presumed that this is because the amount of the plasticizer that interacts with the hydroxyl groups of the PVA molecules becomes too large, weakening the interaction between the PVA molecules.

In addition, from the above, in the PVA film containing an appropriate amount of the plasticizer, it is presumed that as the crystallization of the PVA molecules progresses moderately, the ratio of the crystal part and the amorphous part in the PVA molecule is balanced and it is possible to impart excellent water solubility and high mechanical strength to the PVA film.

The content of the plasticizer in the PVA film is not particularly limited, but is preferably 5 to 70 parts by mass, more preferably 7 to 50 parts by mass, and even more preferably 10 to 30 parts by mass based on 100 parts by mass of the PVA. When the content of the plasticizer is within the above range, it is easy to adjust the degree of the phase separation state in the obtained PVA film and the ratio of the crystal part and the amorphous part in the PVA molecule to appropriate ranges.

<Starch/water-soluble polymer>

The PVA film may contain at least one of starch or water-soluble polymer other than the PVA. By containing at least one of the starch and the water-soluble polymer other than the PVA, it is possible to increase the mechanical strength of the PVA film, maintain moisture resistance of the PVA film during handling, and adjust a softening speed of the PVA film by absorbing water, and the like.

Examples of the starch include natural starches, such as corn starch, potato starch, sweet potato starch, wheat starch, rice starch, tapioca starch, and sago starch; processed starches subjected to etherification, esterification, oxidation, and the like; and the like, and processed starches are particularly preferable.

A content of starch in the PVA film is not particularly limited, but is preferably 15 parts by mass or less, and more preferably 10 parts by mass or less with respect to 100 parts by mass of the PVA. When the content of the starch is within the above range, deterioration of a processability of the PVA film can be prevented or suppressed.

Examples of the water-soluble polymers other than the PVA include dextrin, gelatin, glue, casein, shellac, gum arabic, polyacrylic acid amide, sodium polyacrylate, polyvinyl methyl ether, copolymers of methyl vinyl ether and maleic anhydride, Copolymers of vinyl acetate and itaconic acid, polyvinylpyrrolidone, cellulose, acetylcellulose, acetylbutylcellulose, carboxymethylcellulose, methylcellulose, ethylcellulose, hydroxyethylcellulose, sodium alginate, and the like.

A content of the water-soluble polymer other than the PVA in the PVA film is not particularly limited, but is preferably 15 parts by mass or less, and more preferably 10 parts by mass or less with respect to 100 parts by mass of the PVA. When the content of the water-soluble polymer other than the PVA is within the above range, the water solubility of the PVA film can be sufficiently enhanced.

<Surfactant>

The PVA film preferably contains a surfactant. By including the surfactant, it is possible to improve the handleability of the PVA film and the peelability of the PVA film from a film forming apparatus during production.

The surfactant is not particularly limited, and for example, an anionic surfactant, a nonionic surfactant, or the like can be used.

Examples of the anionic surfactants include carboxylic acid type surfactants such as potassium laurate; sulfate type surfactants such as octyl sulfate; and sulfonic acid type surfactants such as dodecylbenzenesulfonate.

Examples of the nonionic surfactants include alkyl ether surfactants such as polyoxyethylene lauryl ether and polyoxyethylene oleyl ether; alkylphenyl ether surfactants such as polyoxyethylene octylphenyl ether; alkyl ester type surfactants such as polyoxyethylene laurate; alkyl amine type surfactants such as polyoxyethylene lauryl amino ether; alkyl amide type surfactants such as polyoxyethylene lauric acid amide; polypropylene glycol ether type surfactants such as polyoxyethylene polyoxypropylene ether; alkanolamide-type surfactants such as lauric acid diethanolamide and oleic acid diethanolamide; and allyl phenyl ether type surfactants such as polyoxyalkylene allyl phenyl ether, and the like.

Such surfactants may be used singly or in combination of two or more. Among the above-mentioned surfactants, due to an excellent effect of reducing surface abnormalities during film formation of the PVA film, the surfactant is not particularly limited, but the nonionic surfactants are preferred, alkanolamide-type surfactants are more preferred, and dialkanolamides (e.g., diethanolamide, etc.) of aliphatic carboxylic acids (e.g., saturated or unsaturated aliphatic carboxylic acids having 8 to 30 carbon atoms, etc.) are even more preferred.

The lower limit of a content of the surfactant in the PVA film is not particularly limited, but is preferably 0.01 parts by mass or more, more preferably 0.02 parts by mass or more, and even more preferably 0.05 parts by mass or more with respect to 100 parts by mass of the PVA. On the other hand, the upper limit of the content of the surfactant is not particularly limited, but is preferably 10 parts by mass or less, more preferably 1 part by mass or less, even more preferably 0.5 parts by mass or less, and particularly preferably 0.3 parts by mass or less with respect to 100 parts by mass of the PVA. When the content of the surfactant is within the above range, the peelability of the PVA film from the film-forming apparatus during production is improved, and problems such as blocking between PVA films are less likely to occur. In addition, problems such as bleeding out of the surfactant to the surface of the PVA film and deterioration of the appearance of the PVA film due to aggregation of the surfactant are less likely to occur.

<Other components>

The PVA film may contain components such as moisture, antioxidants, UV absorbers, lubricants, cross-linking agents, coloring agents, fillers, preservatives, antifungal agents, and other polymer compounds other than the plasticizer, the starch, the water-soluble polymer other than the PVA, and the surfactant, as long as they do not interfere with the effects of the present invention.

A ratio of the total weight of the PVA, plasticizer, starch, water-soluble polymer other than PVA, and surfactant to the total weight of the PVA film is not particularly limited, but is preferably 60 to 100% by mass, more preferably 80 to 100% by mass, and even more preferably 90 to 100% by mass.

The PVA film may contain 100% by mass of the PVA.

In addition to the plasticizer, the starch, the water-soluble polymer other than PVA, the surfactant, the filler, and other high-molecular compounds are examples of the above components that can phase-separate from PVA.

<Water-soluble film>

For the water-soluble film (PVA film) of the present invention, a complete dissolution time when immersed in deionized water at 10°C is not particularly limited, but the following range is preferable. That is, the upper limit of the complete dissolution time is preferably 150 seconds or less, more preferably 90 seconds or less, even more preferably 60 seconds or less, and particularly preferably 45 seconds or less. The PVA film whose the upper limit of the complete dissolution time is within the above range completes dissolution relatively quickly, and therefore can be suitably used as a film for packaging (packaging material) for chemicals and the like. On the other hand, the lower limit of the complete dissolution time is not particularly limited, but is preferably 5 seconds or more, more preferably 10 seconds or more, even more preferably 15 seconds or more, and particularly preferably 20 seconds or more. With such a PVA film whose complete dissolution time is not too short, problems such as occurrence of blocking (adhesion) between the PVA films due to absorption of moisture in the atmosphere and deterioration of the mechanical strength of the PVA film itself are less likely to occur.

Such characteristics can be suitably obtained by setting the value of the intensity ratio (I(0.5)/I(0.2)) within the above range.

The complete dissolution time when the PVA film is immersed in deionized water at 10°C can be measured as follows.

<1> The PVA film is placed in a thermo-hygrostat adjusted to 20°C-65% RH for 16 hours or more to condition the humidity.

<2> After cutting out a rectangular sample of length 40 mm × width 35 mm from the humidity-conditioned PVA film, the sample is sandwiched and fixed between two plastic plates of 50 mm × 50 mm with rectangular windows (holes) of 35mm length × 23mm width so that the longitudinal direction of the sample is parallel to the longitudinal direction of the window and the sample is positioned substantially at the center of the window in the width direction.

<3> 300 mL of deionized water is poured into a 500 mL beaker and adjust the water temperature to 10°C while stirring with a magnetic stirrer equipped with a 3 cm long bar at 280 rpm.

<4> The sample fixed to the plastic plate in <2> above is immersed in the deionized water in the beaker while being careful not to let it come into contact with the bar of the magnetic stirrer.

<5> The time from immersion in the deionized water until the sample immersed in the deionized water completely disappears is measured.

Although the thickness of the PVA film is not particularly limited, the following range is preferable. That is, the upper limit of the thickness is preferably 200 pm or less, more preferably 150 pm or less, even more preferably 100 pm or less, and particularly preferably 50 pm or less. On the other hand, the lower limit of the thickness is preferably 5 pm or more, more preferably 10 pm or more, even more preferably 15 pm or more, and particularly preferably 20 pm or more. Since the thickness within the above range is not too large, it is possible to suitably prevent deterioration of the secondary processability of the PVA film. On the other hand, since the thickness in the above range is not too small, the PVA film can maintain sufficient mechanical strength. In particular, in the present invention, since the value of the intensity ratio (I (0.5)/I(0.2)) is set within the above range, even the PVA film with a relatively small thickness can maintain high mechanical strength.

The thickness of the PVA film can be obtained by measuring the thickness at 10 arbitrary points (for example, 10 arbitrary points on a straight line drawn in the length direction of the PVA film) and calculating the average value of the measured thicknesses.

<Method for producing water-soluble film>

The method for producing the water-soluble film (PVA film) of the present invention is not particularly limited, but, for example, any method such as the following can be used.

The method for producing the PVA film may be an arbitrary method, such as a film formation method where a solvent, additives, and the like are added to the PVA and homogenized to obtain a film forming stock solution to be used in casting film formation, wet film formation (discharge into a poor solvent), dry/wet film formation, gel film formation (a method of extracting and removing the solvent after once cooling and gelling the film forming stock solution), and combination thereof, melt extrusion film formation where the above film forming stock solution thus obtained is extruded from a T die or the like using an extruder or the like, inflation molding, and the like. Among the methods described above, the casting film-forming method and the melt extrusion film-forming method are preferable as the method for producing the PVA film. The homogeneous PVA film can be obtained with good productivity by using the casting film-forming method and the melt extrusion film-forming method.

Below, the case of producing the PVA film using the casting film-forming method or the melt extrusion film-forming method will be described.

Examples of the solvent include water, dimethylsulfoxide, dimethylformamide, dimethylacetamide, N-methylpyrrolidone, ethylene glycol, glycerin, propylene glycol, diethylene glycol, triethylene glycol, tetraethylene glycol, trimethylolpropane, ethylenediamine, diethylenetriamine, and the like. Among the above-mentioned solvents, water is preferable as the solvent because of its low burden on the environment and its easy recovery. In addition, one of the above solvents may be used singly, or two or more thereof may be used in combination.

The method for preparing the film forming stock solution is not particularly limited, and for example, a method of dissolving the PVA in a solvent in a dissolution tank and then adding other components for homogenization, a method in which a mixture of the PVA, the solvent and the plasticizer is fed into the extruder and melted, after which other additives are added, and the like can be adopted. Among the above-mentioned methods, the latter method is preferable because the phase separation state of the obtained PVA film can be easily adjusted appropriately.

In this latter method, a maximum shear rate in the extruder is not particularly limited, but is preferably 10 to 300 $s^{-1}$. The upper limit of the maximum value of the shear rate is more preferably 200 $s^{-1}$ or less, even more preferably 150 $s^{-1}$ or less. On the other hand, the lower limit of the maximum value of the shear rate is more preferably 12 $s^{-1}$ or more, even more preferably 15 $s^{-1}$ or more. When the maximum value of the shear rate is within the above range, the dispersibility of the components other than the PVA (additives such as the plasticizer) in the PVA is sufficiently increased, and the crystal long period structure of the PVA molecules and the phase separation state in the PVA film are improved.

When the PVA film is produced using the casting film-forming method or the melt extrusion film-forming method, first, the film forming stock solution containing PVA, the solvent, and optionally additives such as the plasticizer are prepared. When the film forming stock solution contains the additive, the ratio of the additive to the PVA in the film forming stock solution is substantially equal to the ratio of the additive to the PVA in the PVA film described above.

Next, the film forming stock solution is poured (supplied) in the form of a film onto a rotating support such as a metal roll or metal belt. As a result, a liquid coating of the film forming stock solution is formed on the support. The liquid coating is solidified into a film by heating on the support to remove the solvent.

The solidified long film (PVA film) is peeled off from the support, dried with a drying roll, a drying furnace, etc., if necessary, further heat-treated, and wound into a roll.

In the drying process (solvent removal process) of the liquid coating poured onto the support and the subsequent drying process of the PVA film, the crystallization of the PVA progresses during the heat drying. In particular, when the PVA is heated in a region with a high moisture content, the mobility of its molecular chains increases, so that crystallization proceeds and the degree of crystallinity increases. Therefore, degree of crystallization of the PVA can be controlled by a drying rate in the drying process. For example, when a drying speed is increased, crystal growth is inhibited and the degree of crystallinity tends to decrease. On the other hand, when the drying rate is slowed down, the crystal growth tends to be promoted and the degree of crystallinity tends to increase. Further, when an amount of heat applied is increased, the degree of crystallinity of the PVA increases, and the water-solubility of the PVA film tends to decrease. Moreover, in the present embodiment, the phase separation state in the PVA film can be adjusted by controlling the degree of crystallization of the PVA.

The drying rate can be adjusted by adjusting the temperature of the support, the contact time with the support, the temperature and amount of hot air, the temperature of the drying roll and the drying oven, and the like.

A volatile content ratio of the film forming stock solution (concentration of volatile components such as solvents removed by volatilization or evaporation during film formation) is not particularly limited, but is preferably 50 to 90% by mass, and more preferably 55 to 80% by mass. When the volatile content ratio is within the above range, the viscosity of the film forming solution can be adjusted to a suitable range, so that the film-forming property of the PVA film (liquid coating) is improved, and it becomes easier to obtain the PVA film having a uniform thickness. In addition, since the volatile content ratio of the film forming stock solution is appropriate, the crystallization of the PVA on the support proceeds moderately, and a favorable phase separation state tends to be formed in the PVA film.

As used herein, the term "volatile content ratio of the film forming stock solution" refers to a value obtained by the following formula.

```
    Volatile content ratio (% by mass) of film forming stock
solution = {(Wa-Wb)/Wa}×100
```

In the formula, Wa represents the mass (g) of the film forming stock solution, and Wb represents the mass (g) after drying the film forming stock solution of Wa (g) in an electric heat dryer at 105°C for 16 hours.

A surface temperature of the support onto which the film forming stock solution is poured is not particularly limited, but is preferably 50 to 110°C, more preferably 60 to 100°C, and even more preferably 65 to 95°C. When the surface temperature is within the above range, the drying of the liquid coating progresses at an appropriate rate, making it easier to adjust the long-period crystal structure of the PVA molecules. That is, since the crystallinity of the PVA is neither extremely high nor low, the degree of the phase separation state between the PVA and the plasticizer and other additives tends to be moderate in the PVA film. In addition, by drying the liquid coating at an appropriate speed, the time required for drying the liquid coating does not become too long, the productivity of the PVA film does not decrease, and the surface of the PVA film does not easily develop an abnormality such as foaming.

At the same time as heating the liquid coating on the support, hot air may be uniformly blown to the entire non-contact surface side of the liquid coating at a wind speed of 1 to 10 m/sec. Thereby, the drying speed of the liquid coating can be adjusted. The temperature of the hot air blown to the non-contact surface side is not particularly limited, but is preferably 50 to 150°C, more preferably 70 to 120°C. When the temperature of the hot air is within the above range, the efficiency of drying the liquid coating, the uniformity of drying, etc. can be further enhanced.

The PVA film is preferably dried (solvent removal) on the support to the volatile content ratio of 5 to 50 mass %, then peeled off from the support and further dried as necessary.

The drying method is not particularly limited, and includes a method of passing through a drying oven and a method of contacting with a drying roll.

When drying the PVA film using a plurality of drying rolls, it is preferable to bring one side and the other side of the PVA film into contact with the drying rolls alternately. As a result, the degree of crystallinity of the PVA and the degree of the phase separation state can be made uniform on both sides of the PVA film. In this case, the number of drying rolls is not particularly limited, but is preferably 3 or more, more preferably 4 or more, and even more preferably 5 to 30.

The temperature of the drying oven or drying rolls is not particularly limited, but is preferably 40 to 110°C. The upper limit of the temperature of the drying oven or the drying rolls is more preferably 100°C or less, even more preferably 90°C or less, and particularly preferably 85°C or less. On the other hand, the lower limit of the temperature of the drying oven or the drying rolls is more preferably 45°C or more, and even more preferably 50°C or more. When the temperature of the drying oven or the drying rolls is within the above range, it becomes easier to adjust the balance between the ratio of the crystal part and the ratio of the amorphous part in the PVA molecule.

The PVA film after drying can be further heat-treated as necessary. By performing heat treatment, properties such as mechanical strength, water solubility, and birefringence of the PVA film can be adjusted.

The heat treatment temperature is not particularly limited, but is preferably 60 to 135°C. As for the upper limit of the temperature of heat processing, 130°C or less is more preferable. When the temperature of the heat treatment is within the above range, the amount of heat given to the PVA film becomes appropriate, and it is possible to prevent the crystallinity of the PVA from becoming too large.

The water-soluble film produced in this manner is further wound on a cylindrical core into a roll and moistureproof packaged to form a product after applying humidity control treatment and cutting of both ends (edges) of the film, if necessary.

The volatile content ratio of the PVA film finally obtained by a series of treatments is not particularly limited, but is preferably 1 to 5% by mass, more preferably 2 to 4% by mass.

<Application>

The water-soluble film (PVA film) of the present invention has an excellent balance between water-solubility and mechanical strength and can be suitably used in various film applications to which general water-soluble films are applied.

Examples of the above-mentioned film applications include chemical packaging films, liquid pressure transfer base films, embroidery base films, release films for forming artificial marble, seed packaging films, waste storage bag films, and the like. Among the films described above, the water-soluble film of the present invention is preferably applied to a chemical packaging film because the effects of the present invention can be obtained more remarkably.

When the water-soluble film of the present invention is used as the chemical packaging film, the types of chemicals include, for example, pesticides, detergents (including bleaching agents), disinfectants, and the like.

The physical properties of the chemical are not particularly limited, and may be acidic, neutral, or alkaline.

In addition, the chemical may contain a boron-containing compound.

The chemical may be in the form of powder, mass, gel or liquid, but liquid is preferred.

The form of packaging is also not particularly limited, and the form of unit packaging (preferably sealed packaging) in which the chemical is packaged by unit amount is preferred.

The package of the present invention is obtained by applying the water-soluble film of the present invention to the chemical packaging film to package the chemical. In other words, the package of the present invention includes a packaging material (capsule) composed of the water-soluble film of the present invention and the chemical enclosed in the packaging material.

The water-soluble film of the present invention has a intensity ratio ($I(0.5)/I(0.2)$) of 0.05 to 0.5, so that it is excellent in water solubility, is difficult to stick, and has high mechanical strength. Therefore, in the package of the present invention, the packaging material dissolves quickly in water under cold conditions such as in winter, and the encapsulated chemical is efficiently released. In addition, the package of the present invention is less likely to cause problems such as breakage of the packaging material during storage and transportation.

## EXAMPLES

Hereinafter, the present invention will be specifically described below with reference to examples and the like, but the present invention is not limited by the following examples. Evaluation items and evaluation methods adopted in the following examples and comparative examples are as follows.

(1) Measurement of small-angle X-ray scattering (SAXS) and calculation of intensity ratio of scattering intensity

Under the conditions described above, the small-angle X-ray scattering measurement was performed on the formed water-soluble film, and from obtained scattering intensity profile, values of the scattering intensity at the scattering vector value (q value) of 0.2 nm$^{-1}$ and the scattering intensity at the q value of 0.5 nm$^{-1}$ were read and their ratio was calculated.

(2) Complete dissolution time of PVA film

The complete dissolution time of the PVA film in deionized water at 10°C was determined by the method described above.

(3) Transportation test

First, two samples of 50 mm × 70 mm cut out from the PVA film were stacked and heat-sealed on three sides to create a packaging material.
About 35 g of detergent was put into the obtained packaging material, and the upper part (mouth part) of the packaging material was heat-sealed to produce a package.
In this regard, the detergent includes 8% by mass of monoethanolamine, 24% by mass of dodecylbenzenesulfonic acid, 20% by mass of oleic acid, 24% by mass of lauryl alcohol ethoxylate, 9% by mass of propylene glycol, 9% by mass of diethylene glycol, and 6% by mass of water.
Next, 100 of the resulting packages were packed in a 45 L polyethylene bag, and the polyethylene bag was placed in a cardboard box (320 cm × 335 cm × 325 cm). The gap between the polyethylene bag and the cardboard box was filled with cushioning material.
Then, the cardboard box containing the package was loaded on a truck, and a transportation test was conducted by making 10 round trips between Okayama Prefecture and Tokyo.
The packages after transportation were observed, and the total number of torn packages and clearly deformed packages was determined.

<Example 1>

First, 100 parts by mass of PVA (degree of saponification: 88 mol%, viscosity average polymerization degree: 1700) obtained by saponifying polyvinyl acetate, 20 parts by mass of polyethylene glycol (PEG) having an average molecular weight of 500 as a plasticizer, 0.1 parts by mass of lauric acid diethanolamide as a surfactant and water were blended to prepare a film forming stock solution. The volatile content ratio of the film forming stock solution was 68% by mass.
Next, the film forming stock solution was extruded from a T-die onto a first drying roll (surface temperature of 80°C), which was a support, in the form of a film using a single-screw extruder under the condition that the maximum value of the shear rate in the extruder was 18 s$^{-1}$ to form a liquid coating on the first drying roll. On the first drying roll, hot air of 85°C was blown at a speed of 5 m/sec to dry the entire non-contact surface of the liquid coating with the first drying roll. A PVA film was thus obtained.
Next, the PVA film was peeled off from the first drying roll, dried by alternately contacting one side and the other side of the PVA film with each drying roll, and then wound into a roll on a cylindrical core. The surface temperature of each drying roll after the second drying roll was set to about 75°C. The obtained PVA film had a thickness of 35 um and a width of 1200 mm.
As a result of performing SAXS measurement on the obtained PVA film, I(0.5)/I(0.2) was 0.15.
Also, when the complete dissolution time of the obtained PVA film was measured, the complete dissolution time was 34 seconds.
Furthermore, when the transportation test was conducted on the packages made from the obtained PVA film, 5 packages were torn after transportation.

<Example 2 and Comparative Example 1>

PVA films were obtained in the same manner as in Example 1, except that the amounts of polyethylene glycol used for preparing the film forming stock solution were changed to 10 parts by mass and 40 parts by mass, respectively.

<Comparative Example 2>

A PVA film was obtained in the same manner as in Example 1, except that the maximum shear rate in the extruder during film formation was adjusted to $7s^{-1}$. The maximum shear rate was adjusted by changing the groove depth and rotation speed of the extruder screw.

<Comparative Example 3>

A PVA film was obtained in the same manner as in Example 1, except that the surface temperature of the first drying roll that discharges the film forming stock solution was changed to 40°C, and the temperature of the hot air that was blown to the non-contact surface of the liquid coating with the first drying roll was changed to 45°C to obtain a PVA film.

<Example 3>

A PVA film was obtained in the same manner as in Example 1, except that the plasticizer used in preparing the film forming stock solution was changed from polyethylene glycol to glycerin.

<Example 4 and Comparative Example 4>

PVA films were obtained in the same manner as in Example 3, except that the amounts of glycerin used in preparing the film forming stock solution were changed to 10 parts by mass and 2 parts by mass, respectively.

<Examples 5 and 6>

PVA films were obtained in the same manner as in Example 4, except that the PVAs used for preparing the film forming stock solution were changed to maleic anhydride (MAn)-modified PVA (degree of saponification: 98 mol%, degree of polymerization: 1700, amount of modification: 2 mol%) and sodium acrylamido-2-methylpropanesulfonate (AMPS)-modified PVA (degree of saponification: 88 mol%, degree of polymerization: 1700, amount of AMPS modification: 2 mol%), respectively.

<Example 7>

A PVA film was obtained in the same manner as in Example 5, except that the addition of a plasticizer was omitted when preparing the membrane-forming stock solution, the surface temperature of the first drying roll that discharges the film forming stock solution was set to 40°C, and the temperature of the hot air blown to the non-contact surface of the liquid coating with the first drying roll was changed to 45°C, respectively.

The evaluation results of the measured films thus obtained are shown in Table 1.

[TABLE 1]

Table 1

| | PVA | | | Plasticizer | | Film formation conditions | | | Evaluation results | | |
|---|---|---|---|---|---|---|---|---|---|---|---|
| | Other mono-mer | Amount of mod-ification (mol%) | Degree of sapon-ification (mol%) | Type | Amount (parts by mass) | Shear rate in the ex-truder (S$^{-1}$) | Surface tem-perature of first drying roll (°C) | Temperature of hot air blown onto first drying roll (°C) | I (0.5)/ I (0.2) | Number of bro-ken packages af-ter transportation test (pieces) | complete dissolution time (s) |
| Example 1 | None | - | 88 | PEG | 20 | 18 | 80 | 85 | 0.15 | 5 | 34 |
| Example 2 | None | - | 88 | PEG | 10 | 18 | 80 | 85 | 0.24 | 3 | 37 |
| Example 3 | None | - | 88 | Glycerin | 20 | 18 | 80 | 85 | 0.28 | 3 | 31 |
| Example 4 | None | - | 88 | Glycerin | 10 | 18 | 80 | 85 | 0.38 | 0 | 41 |
| Example 5 | MAn | 2 | 98 | Glycerin | 10 | 18 | 80 | 85 | 0.27 | 0 | 28 |
| Example 6 | AMPS | 2 | 88 | Glycerin | 10 | 18 | 80 | 85 | 0.24 | 0 | 27 |
| Example 7 | MAn | 2 | 98 | - | 0 | 18 | 40 | 45 | 0.49 | 6 | 42 |
| Comparative Example 1 | None | - | 88 | PEG | 40 | 18 | 80 | 85 | 0.03 | 18 | 22 |
| Comparative Example 2 | None | - | 88 | PEG | 20 | 7 | 80 | 85 | 0.04 | 13 | 36 |
| Comparative Example 3 | None | - | 88 | PEG | 20 | 18 | 40 | 45 | 0.03 | 17 | 25 |
| Comparative Example 4 | None | - | 88 | Glycerin | 2 | 18 | 80 | 85 | 0.71 | 11 | 55 |

As shown in Table 1, the PVA films of the respective examples having the intensity ratio (I(0.5)/I(0.2)) in the range of 0.05 to 0.5 were excellent in both water solubility and mechanical strength. In contrast, the PVA films of the respective comparative examples that did not satisfy the above conditions were inferior in at least one of water solubility and mechanical strength.

## Claims

1. A water-soluble film containing a polyvinyl alcohol based resin,
   wherein small-angle X-ray scattering (SAXS) measurement is performed on the water-soluble film in a mixed liquid of water and methanol at a volume ratio of 2:8 and when a scattering intensity at a scattering vector value determined from a obtained scattering intensity profile (q value) of 0.2 $nm^{-1}$ is defined as I(0.2) and a scattering intensity at the q value of 0.5 $nm^{-1}$ is defined as 1(0.5), an intensity ratio (I(0.5)/I(0.2)) of the scattering intensity I(0.5) to the scattering intensity I(0.2) is 0.05 to 0.5.

2. The water-soluble film as claimed in claim 1, wherein the water-soluble film further contains a plasticizer.

3. The water-soluble film as claimed in claim 2, wherein the plasticizer is a polyhydric alcohol.

4. The water-soluble film as claimed in claim 3, wherein the polyhydric alcohol contains at least one selected from the group consisting of ethylene glycol, glycerin, diglycerin, propylene glycol and diethylene glycol.

5. A package comprising:

   a packaging material composed of the water-soluble film as claimed in any one of claims 1 to 4; and
   a chemical encapsulated in the packaging material.

6. The package as claimed in claim 5, wherein the chemical is a pesticide, a detergent or a germicide.

7. The package as claimed in claim 5 or 6, wherein the chemical is in a liquid form.

FIG. 1

CRYSTAL PART    AMORPHOUS PART

| INTERNATIONAL SEARCH REPORT | International application No. |
|---|---|
| | PCT/JP2021/022535 |

**A. CLASSIFICATION OF SUBJECT MATTER**
B65D 65/46(2006.01)i; C08K 5/053(2006.01)i; C08L 29/04(2006.01)i; C08J 5/18(2006.01)i
FI: C08J5/18 CEX; C08L29/04 A; C08K5/053; B65D65/46
According to International Patent Classification (IPC) or to both national classification and IPC

**B. FIELDS SEARCHED**

Minimum documentation searched (classification system followed by classification symbols)
B65D65/46; C08K5/053; C08L29/04; C08J5/18

| Documentation searched other than minimum documentation to the extent that such documents are included in the fields searched | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2013/146147 A1 (KURARAY CO., LTD.) 03 October 2013 (2013-10-03) paragraphs [0085] | 1–7 |
| A | WO 2019/124310 A1 (KURARAY CO., LTD.) 27 June 2019 (2019-06-27) paragraphs [0055]-[0056] | 1–7 |
| A | WO 2009/028141 A1 (KURARAY CO., LTD.) 05 March 2009 (2009-03-05) paragraphs [0060]-[0063] | 1–7 |
| A | JP 2004-161823 A (THE NIPPON SYNTHETIC CHEMICAL INDUSTRY CO., LTD.) 10 June 2004 (2004-06-10) claims, paragraphs [0060]-[0079] | 1–7 |

☒ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 August 2021 (11.08.2021) | 24 August 2021 (24.08.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
| --- |
| PCT/JP2021/022535 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2005-179390 A (THE NIPPON SYNTHETIC CHEMICAL INDUSTRY CO., LTD.) 07 July 2005 (2005-07-07) claims, paragraphs [0071]-[0072], [0079], table 1 | 1-7 |
| A | WO 2019/189684 A1 (MITSUBISHI CHEMICAL CORPORATION) 03 October 2019 (2019-10-03) claims, paragraph [0131] | 1-7 |
| A | JP 2006-188655 A (THE NIPPON SYNTHETIC CHEMICAL INDUSTRY CO., LTD.) 20 July 2006 (2006-07-20) claims, paragraphs [0062], [0090]-[0096] | 1-7 |
| P, A | WO 2020/138442 A1 (KURARAY CO., LTD.) 02 July 2020 (2020-07-02) claims, paragraphs [0068]-[0079] | 1-7 |

Form PCT/ISA/210 (continuation of second sheet) (January 2015)

**INTERNATIONAL SEARCH REPORT**
Information on patent family members

International application No.

PCT/JP2021/022535

| Patent Documents referred in the Report | Publication Date | Patent Family | Publication Date |
|---|---|---|---|
| WO 2013/146147 A1 | 03 Oct. 2013 | JP 2014-59564 A<br>KR 10-2013-0132667 A<br>CN 104169342 A | |
| WO 2019/124310 A1 | 27 Jun. 2019 | TW 201930422 A | |
| WO 2009/028141 A1 | 05 Mar. 2009 | JP 2015-3524 A<br>CN 101734590 A<br>KR 10-2010-0049604 A | |
| JP 2004-161823 A | 10 Jun. 2004 | US 2004/0092535 A1<br>claims, examples<br>EP 1418196 A1 | |
| JP 2005-179390 A | 07 Jul. 2005 | (Family: none) | |
| WO 2019/189684 A1 | 03 Oct. 2019 | (Family: none) | |
| JP 2006-188655 A | 20 Jul. 2006 | (Family: none) | |
| WO 2020/138442 A1 | 02 Jul. 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017078166 A

- WO 2013146147 A

**Non-patent literature cited in the description**

- **SAKURAI et al.** *J. Appl. Cryst,* 1991, vol. 24, 679